# EUROPEAN PATENT APPLICATION

(11) **EP 1 981 145 A2**
(43) Date of publication of application: **15.10.2008**
(21) Application number: 07017846.2
(22) Date of filing: 12.09.2007
(51) Int. Cl.: H02J 7/00

(54) **Charger with input and output voltages adjustable by means of single circuit mated plug-in card type switch**

(30) Priority: 13.04.2007 CN 200720119558 U; 18.05.2007 CN 200710074360
(71) Applicant: Mainfair Products Development Co., Ltd., Kwai Chung, N.T. Hong Kong (CN)
(72) Inventor: Chan, King Kwong, Kwai Chung, N.T. Hong-Kong (CN)
(74) Representative: Manasse, Uwe

(57) **Abstract**

The present invention provides a charger whose input and output voltages are adjusted by means of a single circuit mated plug-in card type switches, in particular relates to a charger that is suited for various input voltages adjusted by various plug-in cards to achieve charging, which has a function of adjusting output voltages by means of plug-in card-type switches to securely and properly charge various electronic terminals having various rated voltages, and whose voltages are universally used for charging electronic terminals. The charger is characterized by comprising a charger body (1), a DC input and output jack (11) and a slot (10) on one side of the charger body (1); a circuit main board, N battery packs and a display circuit (9) built in the charger body (1); a plurality of input plug-in cards (2) and a plurality of DC input converters (5), or a plurality of output plug-in cards (3) and a plurality of DC output converters (7), mated with the DC input and output jack (11) and the slot (10), and plug type DC jacks (8) arranged at one end of the plurality of DC input converters (5) and the plurality of DC output converters (7) respectively; and a external power source (4) and output wires (12) connected to the plug type DC jacks (8) respectively. The external power source (4) is input into the built in electronic circuit through the plurality of input converters (5) and the plurality of input plug-in cards (2), so that the input charging current can be adjust to charge the battery packs, and there also are electronic circuit arranged in the plurality of output plug-in cards (3), so that output voltage can be adjusted by changing values of electronic parts to satisfy the charging requirement of electronic terminals.

## Description

### BACKGROUND OF THE INVENTION

### FIELD OF INVENTION

The preset invention relates to a charger, more particularly, to a charger whose input and output voltages are adjusted by means of a single circuit mated plug-in card type switches, and it is suited for various input voltages to achieve charging, which has a function of adjusting output voltages by means of the plug-in card-type switches to securely and properly charge various electronic terminals having various rated voltages, and whose voltages are universally used for charging electronic terminals.

### DESCRIPTION OF PRIOR ART

Some drawbacks arise as chargers become popular in that power source of different electronic terminals are not general so that convenience and practicability are affected, for example, when using hi-tech products such as notebooks, portable recorders, digital cameras, 3^{rd} generation audio file compression format players (ipods), personal digital assistants (PDAs), mobile phones, charging can only be done through a charger suited for itself, that is charging can only be done by one-to-one suited ways to achieve the same voltage or current, and the voltage can not be adjusted, so the user is inconvenienced to use them; incidentally, it is needed to improve and enhance output state functions of chargers, that is to say, when in a travel or errand, electronic products and chargers thereof have to be carried because the chargers are suited for limited user terminals in view of the principal that they can only be used by a suit, but thus the room of the traveling bag will be occupied more; furthermore, the chargers of existing products are simplex and stiff in construction and structure. Consequently, the existing chargers need to be further improved as the technology is proceeding and products renew continuously.

### SUMMARY OF THE INVENTION

The present invention provides a charger whose input and output voltages are adjusted by means of a single circuit mated plug-in card type switches, which receives various different input voltages by adopting the plug-in card type switches voltage adjusting technology. The output voltage of the plug-in card type switches can be used to charge electronic terminals having various rated voltages.

The technical problem to be solved by the charger according to the present invention is achieved by the following technical solution that construct a charger whose input and output voltages are adjusted by means of a single circuit mated plug-in card type switches, characterized by comprising a charger body, a DC input and output jack and a slot on one side of the charger body; a circuit main board, N battery packs and a display circuit built in the charger body; a plurality of plug-in cards and a plurality of DC input converters mated with the DC input and output jack and the slot, or a plurality of plug-in cards and a plurality of DC output converters, and plug type DC jacks arranged at one end of the plurality of input and output converters to supply connection ports for external power input (e.g. AC, DC or solar energy) or power output of the charger.

The charger whose input and output voltages are adjusted by means of a single circuit mated plug-in card type switches is characterized in that the power input enters the plurality of battery packs by average, cyclic and stepping ways, and the display circuit monitors charging states of each battery pack, and each battery pack is charged to full to the same level in parallel.

The voltage adjustment by the plug-in card is designed to be mostly in the circuit main board of the product, leaving the voltage selecting part outside the plug-in card, wherein various different voltage circuits and parts are arranged on the plug-in card; when the plug-in card is put into the product, the plug-in card mates with the main board, and different voltage or current outputs can be converted by means of different plug-in cards of different values, and a plurality of DC input converters or a plurality of DC output converters are adopted to satisfy charge requirements of all the electronic terminals to follow the change of the market. This is different from other chargers whose voltage adjustment is on the circuit main board and that make selection on the charger body in use.

The power input charges the plurality of battery packs to full to the same level in parallel, and then raises the voltage in series and output it, wherein the magnitudes of the voltage and the current are in proportion with the capacities and amounts of the plurality of battery packs; the charger also includes output wires with one side connected to the DC output converters of the plug-in card circuit, the other side connected to charged electronic terminal and being mated with its interface.

The present invention has the following advantages: the single circuit may mate a plurality of charging voltages, power inputs of various different voltages can be received, the power inputs enter N battery packs in average, cyclic and stepping ways, and the display circuit monitors charging states of each battery pack, and each battery pack is charged to full to the same level in parallel, which enhance the practicality, expand the applicable scope, and different electronic products of different rated voltages can be charged by arranging external plug-in card type circuit, and connecting N battery packs in series to be a high-voltage output state circuit by means of a plurality of plug-in cards and a plurality of DC converters. The structure of the present invention is reasonable, the construction thereof is novel and the practicality is high, and the applicable scope is wide.

### BRIEF DESCRIPTION OF THE DRAWINGS

FIG. 1 is a schematic diagram to an embodiment of a charger according to the present invention.

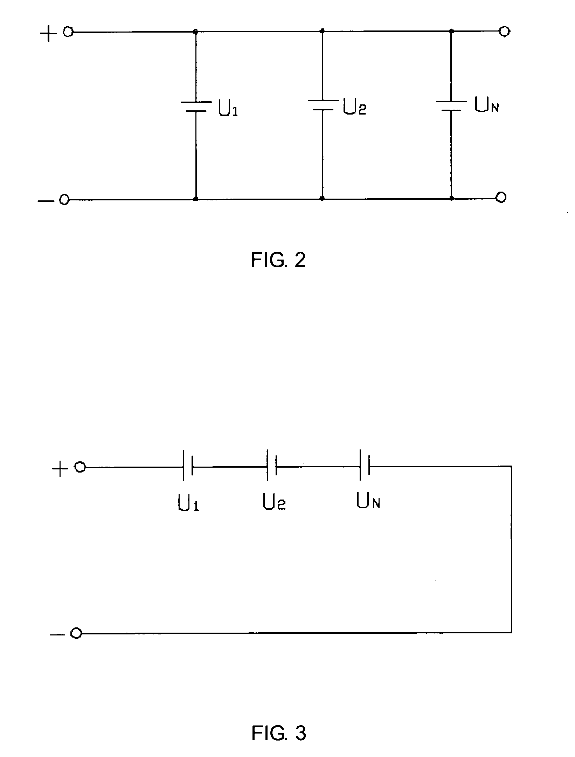

FIG. 2 is a circuit diagram to an embodiment of charging input of a charger according to the present invention.
FIG. 3 is a circuit diagram to an embodiment of discharging output of a charger according to the present invention.

### DETAILED DESCRIPTION

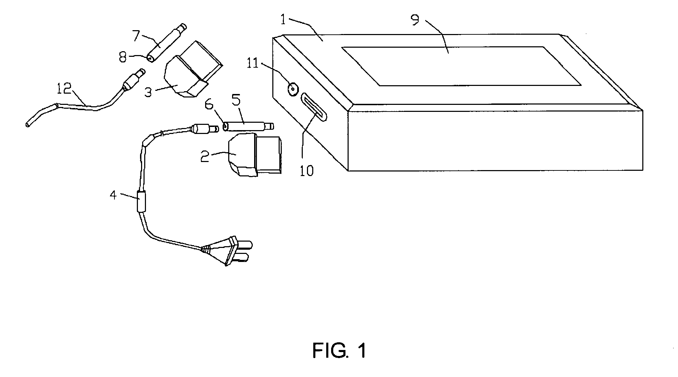

A charger whose input and output voltages are adjusted by means of a single circuit mated plug-in card type switches as shown in Fig. 1 comprises a body 1, a DC input and output jack 11 and a slot 10 mating with one side of the body 1; a circuit main board, a plurality of battery packs and a display circuit 9 built in the charger body 1; and a plurality of input converters 5 and a plurality of cards 2, and a plurality of DC output converters 7 and a plurality of output plug-in cards 3, mated with the DC input and output jack 11 and the slot 10, a plug type DC jack 6 arranged at one end of the DC input converters 5, a plug type DC jack 8 arranged at one end of the DC output converters 7; and an external power source 4 (e.g. AC, DC or solar energy) connected to the plug type DC jack 6, and output wires 12 connected to the plug type DC jack 8.

In the charger whose input and output voltages are adjusted by means of a single circuit mated plug-in card type switches according to the present invention, the plurality of plug-in cards 2 and the plurality of DC input converters 5, 6, and the plurality of output plug-in cards 3 and the plurality of DC output converters 7 include DC jacks 5, 7, plug-in switches 2, 3 mated with one side thereof, and plug-in card type circuits built in the plug-in cards respectively. The plurality of input plug-in cards 2 and the plurality of DC input converters 5 also include plug type DC jacks 6, and the charger is charged by connecting an external power source 4 through external power output port arranged on the plug type DC jack 8 and the external power source 4 connected with it. When charging the charger, the external power source 4 is connected to the plug type DC jack 6 of one of various input converters 5, and the one of the input converters 5 inserts into the DC input and output jack 11 of the charger body 1, and the one of various input plug-in cards 2 inserts into the slot 10 of the charger body 1. When the plug-in card is inserted into the slot, the plug-in card circuit thereof mates with it to recognize proper current or voltage to charge the charger.

The charger according to the present also includes a plurality of output wires 12 connected to the plurality of output plug-in cards 3 and the plurality of DC output converters 7. When the charger charges a electronic terminal, the DC jack 8 of one of the plurality of output converters 7 is connected to one end of the output wires 12, the other end of the output wire 12 is connected to the charged electronic terminal and mates with its interface, and one of the plurality of output converters 7 inserts into DC input and output jack 11 of the charger body 1, and one of the plurality of output plug-in cards 3 inserts into the input and output slot 10 of the charger body 1. When the plug-in card is inserted into the slot 10, the plug-in card circuit thereof mates with it to recognize proper current or voltage, and the charger can output proper and mated voltage or current to charge the electronic terminal. The voltage input and output state adopts semi-automatic plug-in card type switch operation, and recognizes different devices with inside coding of different cards. The voltage adjustment by means of the plug-in card is designed to be mostly in the circuit main board of the product, leaving the voltage selecting part outside the plug-in card, and various different voltage circuits and parts are arranged on the plug-in card; when the plug-in card is inserted into the product, the plug-in card mates with the main board, and different voltage or current outputs can be converted by means of different plug-in cards of different values, so that the application is wide. The automatic detection function can use one and the same terminal as an input and an output, thus can avoid mis-plug.

According the charger whose input and output voltages are adjusted by means of a single circuit mated plug-in card type switches of the present invention, in one implementation, when power is input into the charger, the input plug-in cards function as switches to adjust magnitude of input charging current to charge the battery pack; when the charger outputs power, the output plug-in cards function as switches to adjust magnitude of output voltage to satisfy charging requirements of the electronic terminal, what is needed is only to change the values of electronic parts on the plug-in card type DC combining output and to finely adjust at the same time. The structure of the charger according to the present invention adopts a seal design to be waterproof, and so enhances the practicality.
The features in the foregoing description, in the claims and/or in the accompanying drawings may, both and in any combination thereof, be material for realising the invention in diverse forms thereof.

## Claims

1. A charger whose input and output voltages are adjusted by means of a single circuit mated plug-in card type switches, wherein said adjustable voltages and electric current device established at the outside of the main circuit body and using insert card type or different plugs to control the input and output voltage function; insert card type control can replaced by column stick or pushing stick type controller or installed on different plugs; main electric circuit with N battery packs when the electric current carries on the charge, using parallel way inputs then for other electronic products chargers when connects to raises the voltage and the electric current regulation electric circuit and the main body of electric circuit coordination achieved the voltage and the electric current requirement.

2. The charger according to claim 1 wherein said comprising a charger body and external transforms unit, wherein said charger body (1) comprises N battery packs and a display circuit (9), slot (10), DC input and output jack (11); external transforms unit comprises plurality of voltage and electric current input cards (2), input converters (5), input jack (6), plurality voltage and electric current external power source (4), plurality of voltage and electric current output cards (3), output converters (7), output jack (8), and output wires (12) to satisfy charging requirements of all the electronic terminals.

3. The charger according to claim 1 wherein said comprising parallel inputs enter N battery packs, wherein when external power inputs of different voltages are input, the power inputs enter N battery packs in average, cyclic and stepping ways, and the display circuit monitors charging states of each battery pack, and each battery pack is charged to full to the same level in parallel at the same time.

4. The charger according to claim 1 wherein said comprising a charger body, a DC input and output jack and a slot on one side of the charger body; a circuit main board, N battery packs and a display circuit built in the charger body; a plurality of plug-in cards and a plurality of DC input converters, or a plurality of plug-in cards and a plurality of DC output converters, mated with the DC input and output jack and the slot, and plug type DC jacks arranged at one end of the plurality of DC input converters and the plurality of DC output converters respectively; and a external power source and output wires connected to the plug type DC jacks respectively.

5. The charger according to claim 1 wherein said the N battery packs in series to a high voltage output state circuit power, output of the charger adopts plurality plug-in cards type switches adjusting means to connect and there are plug-in card type circuits built in to satisfy charging requirements and adjusted different voltage and electric current of all the electronic terminals.

6. The charger according to claim 1 wherein said the input and output slots are general-purposed slots commonly used or different slots by power input and power output.

7. The charger according to claim 1 wherein said when power is input into the charger, the charger uses the plurality different voltage and electric current plug-in cards, the plurality plug-in cards function as switches to adjust the input charging current to charge the battery packs.

8. The charger according to claim 1 wherein said when the charger output power, the plug-in cards function as switches to adjust how much output voltage and electric current to satisfy charging requirements of the electronic terminal, what is needed is only to change the values of electronic parts on the plug-in card type DC combining output and to finely adjust at the same time.

9. The charger according to claim 1 wherein said the DC combining input converters also include DC jacks and separated DC plugs mated by plug-in.

10. The charger according to claim 1 wherein said by comprising output wires connected to the plug-in card type DC combining output converters, with one end connected to the charged electronic terminal and the other end connected to its interface.

11. The charger according to claim 1 wherein said the charger adopts a seal design to be waterproof.
